(19) Europäisches Patentamt / European Patent Office / Office européen des brevets

(11) **EP 3 790 405 B1**

(12) **EUROPEAN PATENT SPECIFICATION**

(45) Date of publication and mention
of the grant of the patent:
**20.12.2023 Bulletin 2023/51**

(21) Application number: **19723067.5**

(22) Date of filing: **07.05.2019**

(51) International Patent Classification (IPC):
*A23L 2/08* (2006.01)    *A23L 2/10* (2006.01)
*A23L 2/39* (2006.01)    *A23L 2/40* (2006.01)
*A23L 29/212* (2016.01)    *A23L 19/00* (2016.01)
*A23L 27/00* (2016.01)    *A23L 27/10* (2016.01)
*A23L 33/18* (2016.01)    *A23L 33/185* (2016.01)
*A23L 33/21* (2016.01)    *A23L 13/30* (2016.01)
*A23L 23/10* (2016.01)    *A23L 31/10* (2016.01)
*A23L 2/395* (2006.01)

(52) Cooperative Patent Classification (CPC):
**A23L 23/10; A23L 2/08; A23L 2/10; A23L 2/39;
A23L 2/395; A23L 2/40; A23L 13/30; A23L 19/01;
A23L 27/00; A23L 27/10; A23L 29/212;
A23L 31/10; A23L 33/18; A23L 33/185;
A23L 33/21**

(86) International application number:
**PCT/EP2019/061647**

(87) International publication number:
**WO 2019/215126 (14.11.2019 Gazette 2019/46)**

(54) **PROCESS FOR THE PRODUCTION OF A FOOD COMPOSITION WITH IMPROVED FLOW-ABILITY**

VERFAHREN ZUR HERSTELLUNG EINER LEBENSMITTELZUSAMMENSETZUNG MIT VERBESSERTER FLUSSFÄHIGKEIT

PROCÉDÉ POUR LA PRODUCTION D'UNE COMPOSITION ALIMENTAIRE À CAPACITÉ D'ÉCOULEMENT AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2018 EP 18171514**

(43) Date of publication of application:
**17.03.2021 Bulletin 2021/11**

(73) Proprietor: **Société des Produits Nestlé S.A.
1800 Vevey (CH)**

(72) Inventors:
• **GADDIPATI, Sanyasi**
  **Beachwood**
  **OH 44122 (US)**
• **PERDANA, Jimmy**
  **78224 Singen (DE)**
• **LARREA ANAYA, Erik, Kurt**
  **76093 Santiago de Querétaro (MX)**
• **BOBE, Ulrich**
  **78247 Hilzingen (DE)**
• **SCHROEDER, Volker**
  **88633 Heiligenberg (DE)**
• **BRUTSCH, Linda**
  **1010 Lausanne (CH)**
• **FORNY, Laurent**
  **1000 LAUSANNE 26 (CH)**
• **MEUNIER, Vincent, Daniel, Maurice**
  **1066 EPALINGES (CH)**
• **NEUMANN, Maike**
  **78224 Singen (DE)**

(74) Representative: **Dinger, Hansjörg
Société des Produits Nestlé S.A.
Avenue Nestlé 55
1800 Vevey (CH)**

(56) References cited:
WO-A1-2011/069885  WO-A1-2012/080175
WO-A1-2012/159873  WO-A1-2017/140439
WO-A1-2017/171553  WO-A1-2017/193302
CN-A- 101 564 144  GB-A- 845 937
US-A- 3 940 505

**Description**

The present invention relates to a process for the production of a food composition, and to obtain a better flowability and the avoidance of caking in such composition comprising an amorphous ingredient and a fiber.

Caking of powders, particularly of food powders that occurs during mixing, storage, transportation, handling and packaging of such powders, is a common problem to the industry. Caking or lumping is understood to be, when a food powder forms lumps or agglomerated masses during storage and processing, rather than to flow or continue to flow smoothly as a free flowing powder. Most of the time caking of dry or dehydrated powder is undesired and contributes to reduced product quality, decreased product homogeneity, poor rehydration and dispensability, deterioration of organoleptic quality and shortened shelf life.

Many food powders, whether ingredients, intermediate or final products, are sensitive to caking leading to obvious operational and quality issues. For instance, caked powders cannot be properly discharged in automated industrial installations e.g. for packaging purposes or from final packaging materials to be dosed by consumers. This risk of caking is especially true for sensitive amorphous culinary or beverage powders such as fermented plant ingredients, tomato powder, bio-hydrolysates, onion powder, fruit powders or milk powders.

Dry mixing of food-grade anti-caking agents is a common option to avoid caking of food powders. Examples of anti-caking agents known in the prior art are carbonates of calcium, phosphates (tri-calcium phosphate), silicon dioxide, calcium silicate, and others. However, not all of these agents are positively perceived by consumers. In addition it is important that the anti-caking agents do not affect the organoleptic and/or textural properties of a final food product.

For example, JP2000233922 describes a method to prevent caking of hygroscopic inorganic powders by mixing burnt alum by 0.1-5 wt. % into one or more kinds of low water content hygroscopic inorganic powders selected from salts consisting essentially of sodium chloride such as salt for food, ammonium sulphate, ammonium chloride and potassium chloride, which contains about 0.1 wt. % moisture. The burnt alum absorbs the moisture in the atmosphere such as air to constantly keep the hygroscopic inorganic powder to a dried state.

US2238149 describes a process for reducing the caking tendency of hygroscopic, pulverulent compounds by thoroughly mixing with substantially anhydrous calcium citrate in quantities sufficient to substantially reduce the caking tendency. The calcium citrate is produced through crystalline citric acid and addition of small amounts of calcium oxide.

Consumers are increasingly becoming sensitive to MSG concerns. Many of them justify MSG as not healthy (Chinese restaurant syndrom) and therefore it should be replaced with more natural ingredients, like yeast extract, bacterial extracts, fermented plant ingredient, hydrolyzed plant proteins, vegetable extracts and vegetable powders. These amorphous ingredients possess a high hygroscopicity, which result in caking and less flow-able powders. The term hygroscopicity describes how readily a certain material will take up moisture if exposed to changing relative humidity. In industry, the term hygroscopicity is commonly used for materials that become problematic if relative humidity increases. For example, food powders that show stickiness and caking, caused by humidity conditions, are called hygroscopic.

The behaviour of an amorphous substance upon increasing water content (or temperature rise) can be shown by its state diagram. A typical state diagram illustrates a materials glass transition temperature (Tg) against its water content or water activity. An amorphous material passes from a rigid-glassy to a sticky state, once its glass transition temperature is exceeded. The basic state diagram therefore provides an indication of the stability of the glassy state. The sticky state is problematic during processing/manufacturing and causes caking and less flow-able powders even after going below Tg again.

WO2012/159873 describes a method for preparing dehydrated food composition comprising mixing a vegetable puree with oil and starch and drying the prepared thickend puree. Using starch has certain process disadvantages as such kind of mixtures have a texture of a rubbery dough and are more difficult to pump. In addition, the drying takes longer. Once again solved in water a resulting solution with starch is turbid and not clear.

WO2017171553 describes the preparation of granules and popped granules comprising functional substances, or active substances, and a carbohydrate carrier material, or matrix material, to the use of such granules, and the granules thus obtained. In the inventive preparation, a water-soluble dietary fiber is mixed with the functional substance in the presence of water or other aqueous solution, dried, and, after drying, converted in granules. The granules with improved properties thus obtained can be popped, providing popped granules with improved properties.

It would hence be desirable in the art and the food industry in general to find alternatives and/or even better solutions for amorphous ingredients which can be used in food powders to improve the flow-ability and reduce or even prevent caking during storage, mixing, handling and/or processing, while ensuring a consumer friendly labelling of the used ingredients.

**Summary of the invention**

The object of the present invention is to improve the state of the art and to provide an improved or at least an alternative solution to overcome at least some of the inconveniences described above. The object of the present invention is achieved by the subject matter of the independent claim. The dependent claims further develop the idea of the present invention.

Particularly, the object of the present invention is to provide a process for the production of a food composition with a better flow-ability and the avoidance of caking in such compositions comprising an amorphous ingredient and a fiber.

Accordingly, the present invention provides a process for the production of a food composition comprising between 10 to 90wt% (by dry weight of the food composition) of an amorphous ingredient and between 10 to 90wt% (by dry weight of the food composition) of a fiber, the process comprising the steps of:

> a) Mixing the fiber with the amorphous ingredient and optionally water, wherein the mixture has a water content between 20-80% (by weight of the total mixture);
> b) Drying the mixture of step a) to obtain a food composition powder;
> c) Optionally milling the dried food composition powder obtained in step b);
>
> wherein the fiber is a water insoluble dietary fiber, a cereal bran or a combination thereof and
> wherein the fibers are not considered to be an amorphous ingredient and are water insoluble dietary fibers

It has been surprisingly found by the inventors that by mixing an amorphous ingredient and fiber, wherein the mixture has a water content between 20-80% (by weight of the total mixture) and afterwards drying the obtained wet mixture to a dry food composition, a better flow-ability and less anti-caking of this composition can be achieved compared to the amorphous ingredient itself. Amorphous ingredients possess a high hygroscopicity, which result in caking and are less flow-able. With the process of the invention a flow-able composition with less caking can be obtained.

### Detailed Description of the invention

The present invention pertains to a process for the production of a food composition comprising between 10 to 90wt% (by dry weight of the food composition) of an amorphous ingredient and between 10 to 90wt% (by dry weight of the food composition) of a fiber, the process comprising the steps of:

> a) Mixing the fiber with the amorphous ingredient and optionally water, wherein the mixture has a water content between 20-80% (by weight of the total mixture);
> b) Drying the mixture of step a) to obtain a food composition powder;
> c) Optionally milling the dried food composition powder obtained in step b);
>
> wherein the fiber is a water insoluble dietary fiber, a cereal bran or a combination thereof and
> wherein the fibers are not considered to be an amorphous ingredient and are water insoluble dietary fibers.

The term "amorphous ingredient" according to this invention means ingredients that have a glass transition temperature (Tg) in the range of -30 °C < Tg < 60 °C at 0.10 < aw < 0.60, preferable a Tg in the range of -30 °C < Tg < 60 °C at 0.10 < aw < 0.50, preferable a Tg in the range of -30 °C < Tg < 45 °C at 0.20 < aw < 0.50, preferable a Tg in the range of -30 °C < Tg < 45 °C at 0.20 < aw < 0.45, preferably a Tg in the range of -30 °C < Tg < 25 °C at 0.20 < aw < 0.45, more preferably a Tg in the range of -30 °C < Tg < 0°C at 0.20 < aw < 0.45, more preferably Tg in the range of -20 °C < Tg < 0 °C at 0.15 < aw < 0.45, more preferably Tg in the range of -20 °C < Tg < 0 °C at 0.20 < aw < 0.45. In addition the amorphous ingredient itself has a flow-ability of below 1.9 at room temperature and a water activity of 0.5. Amorphous ingredients are in dry form as a powder or in wet form (broth, juice, concentrate (paste), pulp, puree) as an aqueous amorphous ingredient. Broth means that it is more liquid as a concentrate or paste. Amorphous ingredients according to this invention means at least one ingredient of yeast extract, vegetable powder, vegetable puree, vegetable extract, animal extract, bacterial extract, fermented plant ingredient broth, fermented plant ingredient concentrate, meat powder, fruit puree, fruit powder, fruit extract, meat hydrolysate, reaction flavour broth, reaction flavour concentrate, hydrolysed plant protein broth, hydrolysed plant protein concentrate or a combination thereof. In an embodiment the food composition comprises amorphous ingredient in the range of 10 to 90% (by dry weight of the food composition), preferably 15 to 90%, preferably 20 to 90%, preferably 25 to 90%, preferably 30 to 90%, preferably 35 to 90%, preferably 40 to 90%, preferably 45 to 90%, preferably 50 to 90%, preferably 55 to 90%, preferably 60 to 90%, preferably 65 to 90%, preferably 70 to 90%, preferably 75 to 90%, preferably 30 to 85%, preferably 40 to 85%, preferably 50 to 85%, preferably 55 to 85%, preferably 60 to 85%, preferably 65 to 85%, preferably 70 to 85%, preferably 30 to 80%, preferably 40 to 80%, preferably 50 to 80%, preferably 55 to 80%, preferably 60 to 80%, preferably 65 to 80% (by dry weight of the food composition). Preferably amorphous ingredients according to this invention means at least one ingredient of yeast extract, chicken extract, beef extract, onion powder, garlic powder, celery root powder, tomato powder, tomato puree, bacterial extract, fermented plant ingredient broth, fermented plant ingredient concentrate, hydrolyzed plant protein broth, hydrolyzed plant protein concentrate, reaction flavor broth, reaction flavor concentrate, vegetable puree, fruit puree, fruit powder or a combination thereof. A fermented plant ingredient broth or fermented plant ingredient concentrate is described within WO2009040150 or WO2010105842 as a fermented corn sauce. Another example for a fermented plant ingredient is soya sauce. A vegetable extract is described within WO2013092296. Vegetable powder or vegetable puree are obtained from at least one ingredient of onion, garlic, tomato, spinach, celery root or a combination thereof. A reaction flavor broth or reaction flavor concentrate obtained by a fermentation process and a followed Maillard reaction is described within US5476773. A hydrolyzed plant protein is described within KR20120048111 or US20100221387. A meat extract is described within CN105995587. Fruit powders or fruit purees are obtained from at least one ingredient of strawberry, banana, apple, pineapple, mango, apricot, blackberry, blueberry, peach, pear, plum, raspberry or a combination thereof.

"Fibers" according to this invention are dietary fibers, cereal bran or combination thereof, preferably cereal bran. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of corn, pea, potato, carrot, beetroot, pumpkin, citrus, apple, wheat, oat, bamboo, tomato, bell pepper, leek, ginger, onion, kale, parsnip, celery, cucumber, courgette, broccoli, kohlrabi, asparagus, red cabbage, spinach, endive or combinations thereof, preferably carrot, beetroot, pumpkin, wheat, tomato, corn, pea, potato or combinations thereof, preferably carrot, beetroot, pumpkin, wheat, tomato or combinations thereof. Fibers (dietary fibers, cereal bran or combination thereof) according to this invention are not considered to be an amorphous ingredient and are therefore water insoluble dietary fibers. In an embodiment the dietary fibers are water insoluble dietary fibers. "Bran" according to this invention is the outer layers of the grains consisting of pericarp, testa, aleurone layer germ, and may comprise a part of the starchy endosperm. Commercial bran preparations contain variable amounts of the starchy endosperm and germ depending on the variety of cereal and the milling process. Bran mainly is obtained from cereal grain, such as barley, bulgur, canary grass, common oat (Avena sativa, also referred to herein as oats), corn, millet, rice (e.g. black rice, brown rice and/or wild rice), rye, sorghum, spelt, teff, triticale, wheat and, wheat berries. More preferred whole grain cereals are those from the monocotyledonous plants of the Poaceae family (grass family) cultivated for their edible, starchy grains. Plant species that do not belong to the grass family also produce starchy seeds or fruits that may be used in the same way as cereal grains, are called pseudo-cereals. Examples of pseudo-cereals include amaranth, buckwheat, tartar buckwheat and quinoa. Unless the context herein clearly indicates, otherwise, the term 'cereal' as used herein includes both cereal and pseudo-cereals; and the brans used herein may be from either type. In general, the source of grain that is used depends on the product to which it is to be added, since each grain has its own taste profile.

In one embodiment of the present invention, the cereal bran is selected from the group consisting of rice bran, wheat bran, buckwheat bran, corn bran, oat bran, barley bran, rye bran or a combination thereof, preferably rice bran, wheat bran, buckwheat bran, corn bran, oat bran or a combination thereof.

Depending on the type of cereal grain, the bran constitutes approximately 3-30% of the kernel dry weight. Major component of the bran is dietary fiber. In one embodiment of the invention where the bran originates from whole grains from wheat, the bran may usefully comprise components in the following amounts: fibers 30-70% (w/w), starch 20-50% (w/w), proteins 5-20% (w/w), fat 0.5-10% (w/w).

The bran in the composition may be optionally heat-treated and can be coarse or powdered to reduce its particle size and achieve the particle properties defined. In a preferred embodiment, the bran is powdered cereal bran. Methods of producing powdered bran are known to the person skilled in the art.

In an embodiment of the present invention the cereal bran is milled. Preferably, the cereal bran is dry milled. Typically, milling transforms the cereal bran into a more palatable form by reducing the particle size of the bran. Milling of the bran has the advantage that it e.g. improves the homogeneity of the final product, that it improves the mixing efficiency of the bran and the other ingredients, that it improves the binding ability between the different ingredients, that it improves the digestibility of the bran by the consumer. Milling preferably reduces the particle size of the cereal bran.

The fibers (dietary fibers, cereal bran or combination thereof) are in a powdered form having a median particle size (Dv50) from 5µm to 1000µm, preferably 5µm to 800µm, preferably 5µm to 700µm, preferably 5µm to 500µm, preferably 5µm to 300µm, preferably 5µm to 150µm, preferably 15µm to 1000µm, preferably 15µm to 750µm, preferably 15µm to 500µm, preferably 15µm to 300µm, preferably 15µm to 150µm, preferably 20µm to 1000µm, preferably 20µm to 750µm, preferably 20µm to 500µm, preferably 20µm to 300µm, preferably 20µm to 150µm, preferably 40µm to 700µm, preferably 40µm to 500µm, preferably 40µm to 300µm, preferably 40µm to 150µm, preferably 50µm to 300µm. Particle size and particle size distribution may be measured by laser diffraction using a Malvern Mastersizer.

The food composition comprises between 10 to 90wt% of a fiber (by dry weight of the food composition), preferably at least 12%, preferably at least 15%, preferably at least 20%, preferably in the range of 10 to 80% (by dry weight of the food composition), preferably 10 to 75%, preferably 10 to 70%, preferably 10 to 65%, preferably 10 to 60%, preferably 10 to 55%, preferably 10 to 50%, preferably 10 to 45%, preferably 10 to 40%, preferably 10 to 35%, preferably 10 to 30%, preferably 12 to 70%, preferably 12 to 65%, preferably 12 to 60%, preferably 12 to 55%, preferably 12 to 50%, preferably 12 to 45%, preferably 12 to 40%, preferably 12 to 35%, preferably 12 to 30%, preferably 15 to 70%, preferably 15 to 60%, preferably 15 to 50%, preferably 15 to 45%, preferably 15 to 40%, preferably 15 to 35%, preferably 15 to 30%, preferably 20 to 70%, preferably 20 to 60%, preferably 20 to 50%, preferably 20 to 45%, preferably 20 to 40%, preferably 20 to 35% (by dry weight of the food composition).

The mixture of fiber and the amorphous ingredient has a water content between between 20-80% (by weight of the total mixture) (before drying), preferably between 20-75%, preferably between 20-70%, preferably between 20-65%, preferably between 20-60%, preferably between 20-55%, preferably between 20-50%, preferably between 20-45%, preferably between 25-80%, preferably between 25-70%, preferably between 25-60%, preferably between 25-50% (by weight of the total mixture). The water can be added to a dry amorphous ingredient and/or directly derives from an aqueous amorphous ingredient, preferably the water directly derives from an aqueous amorphous ingredient. The aqueous amorphous ingredient can be in a form of a broth, juice, concentrate, paste, pulp or puree.

"Salt" according to this invention means edible salts capable of imparting or enhancing a salty taste perception. Salt is selected from the group consisting of sodium chloride, potassium chloride, ammonium chloride or a combination thereof, more preferably sodium chloride. In a further embodiment, the food composition further comprises salt in an amount up to 30% (by dry weight of the food composition), preferably up to 25%, preferably up to 20%, preferably up to 14%, preferably in the range of 0 to 30%, preferably between 0.5 to 30%, preferably between 1 to 30%, preferably between 3 to 25%, preferably between 3 to 20%, preferably between 3 to 14% (by dry weight of the food composition).

The dry food composition can be in a powdered form, a granule, an agglomerate or in form of a flake, preferably the dry food composition is an amorphous powder. The dry food composition has particle size distribution with a median diameter Dv50 in the range of 20 to 3500$\mu$m, preferably in the range of 20 to 3000$\mu$m, preferably in the range of 20 to 2500$\mu$m, preferably in the range of 20 to 2000$\mu$m, preferably in the range of 20 to 1500$\mu$m, preferably in the range of 50 to 1500$\mu$m, preferably in the range of 50 to 1000$\mu$m, preferably in the range of 50 to 800$\mu$m, preferably in the range of 100 to 1500$\mu$m, preferably in the range of 100 to 1000$\mu$m, preferably in the range of 100-800$\mu$m, preferably in the range of 200-1500$\mu$m, preferably in the range of 200-1000$\mu$m, preferably in the range of 300-1000$\mu$m, preferably in the range of 300-800$\mu$m. The dry amorphous powder has particle size distribution with a median diameter Dv50 in the range of 20 to 2000$\mu$m, preferably in the range of 20 to 1500$\mu$m, preferably in the range of 20 to 1000$\mu$m, preferably in the range of 20 to 800$\mu$m, preferably in the range of 50 to 1500$\mu$m, preferably in the range of 50 to 1000$\mu$m, preferably in the range of 50 to 800$\mu$m, preferably in the range of 100-1000$\mu$m, preferably in the range of 100 to 800$\mu$m, preferably in the range of 200-1000$\mu$m, preferably in the range of 200-800$\mu$m, preferably in the range of 300-1000$\mu$m, preferably in the range of 300-800$\mu$m. The diameter size of the granules is usually between 0.4 and 6 mm. Preferably the diameter size of the granules is between 0.5 and 5.0mm, more preferably between 0.75 and 3.5mm, even more preferably between 1.10 and 2.85mm. The diameter is taken here as the longest diameter through the particle. In another form, the granules can be described with the corresponding length of 0.5 to 4.0mm, preferably 1.6 to 2.0mm and width of 0.5 to 2.0mm, preferably at 0.6 to 0.9mm.

The particle size Dv50 is used in the conventional sense as the median of the particle size distribution. Median values are defined as the value where half of the population reside above this point, and half resides below this point. The Dv50 is the size in microns that splits the volume distribution with half above and half below this diameter. The particle size distribution may be measured by laser light scattering, microscopy or microscopy combined with image analysis. For example, the particle size distribution may be measured by laser light scattering. Since the primary result from laser diffraction is a volume distribution, the Dv50 cited is the volume median.

The drying step can be carried out by any commonly known drying technique such as air drying, oven drying, freeze drying, drum drying, vacuum drying, bed drying, microwave-vacuum drying, infrared radiation drying or combinations thereof, preferably air drying, oven drying, drum drying, vacuum drying, bed drying, microwave-vacuum drying or combinations thereof. The drying step does not include spray drying. In an embodiment of the invention the drying (except freeze drying) is done at a temperature between 50 to 140°C, preferably between 50 to 120°C, preferably between 60 to 120°C, preferably between 60 to 100°C, preferably between 60 to 90°C, preferably between 60 to 80°C. In an embodiment of the invention the freeze drying is done at a temperature between -85 and 40°C, preferably between -85 and 30°C, preferably between -85 and 25°C, preferably between -85 and 5°C, preferably between -60 and 30°C, preferably between -60 and 25°C, preferably between -60 and 5°C, preferably between -50 and 30°C, preferably between -50 and 5°C. Before drying the mixture has a viscosity of at least 600mPa.s, preferably at least 800mPa.s, preferably at least 1000mPa.s. For spray drying a viscosity of below 350mPa.s is used. In the presence of particles in the slurry, further considerable reduction of the maximum viscosity in the spray drying feed is usually essential to avoid clogging of the spray dryer atomiser. Viscosity is measured with Rheometer at shear rate of 10 s$^{-1}$ using MCR300 rheometer with measuring cylinder CC27 and TEZ150P Peltier thermostatting unit (Anton Paar GmbH, Germany).

Milling according to this invention is a process that breaks solid materials into smaller pieces by grinding, crushing, or cutting. Milling can be carried out by any commonly known milling techniques such as roll mill, hammer mill, chopper mill, ball mill, SAG mil, rod mil or combinations thereof.

In an embodiment the food composition is shelf-stable over 12 months and therefore has a water activity of below 0.50, preferably below 0.45, preferably below 0.40, preferably below 0.35, preferably below 0.30, preferably between 0.01-0.50, preferably between 0.01-0.45, preferably between 0.01-0.40, preferably between 0.01-0.35, preferably between 0.01-0.3 preferably between 0.01-0.25, preferably between 0.01-0.20, preferably between 0.08-0.50, preferably between 0.08-0.45, preferably between 0.08-0.40, preferably between 0.08-0.35, preferably between 0.08-0.30, preferably between 0.08-0.25, preferably between 0.08-0.20. Wetted fibers have a water activity of at least 0.6, preferably at least 0.7. The food composition is in powdered form (free flow-able powder) and not in form of a gel.

"Flow-ability" means flow properties on how easily a powder flows. Flow-ability ($ff_c$) is quantified as the ratio of consolidation stress $\sigma_1$ to unconfined yield strength $\sigma_c$ according to "Schulze, D. (2006). Flow properties of powders and bulk solids. Braunschweig/Wolfenbuttel, Germany: University of Applied Sciences." In an embodiment flow-ability ($ff_c$) of the food composition is at least 1.9 at 23°C, preferably at least 2.0 at 23°C, preferably between the range of 1.9 to 30 at 23°C, preferably between the range of 1.9 to 20 at 23°C, preferably between the range of 2.0 to 30 at 23°C, preferably between the range of 2.0 to 20 at 23°C, preferably at least 2.2 at 23°C, preferably between the range of 2.2 to 30 at 23°C, preferably between the range of 2.2 to 20 at 23°C, preferably at least 2.5 at 23°C, preferably between the range of 2.5 to 25 at 23°C, preferably between the range of 2.5 to 20 at 23°C. Flow-ability was measured using a Schulze Ring Shear Tester RST-01.pc according to ASTM D6467. Flowability measurements were carried out with pre-shear normal stress set to 2600 Pa and shear normal stress to 390, 1235, and 2080 Pa.

Today's consumers prefer more and more food products which are made with only natural food ingredients and do not contain any food additives. Therefore, the present invention provides now a new solution for making food granules which do not need anymore the use of a food additive binder such as a food gum. The resulting products are more natural, with less or no food additives, and consequently much preferred by most consumers today. In one embodiment, the process of the present invention does not make use of maltodextrin or a food gum. Maltodextrin includes also digestion-resistant maltodextrin. Preferably, the food gum not present is selected from the group of agar-agar, alginate, carrageenan, cassia gum, cellulose gum, gellan gum, guar gum, konjac gum, locust bean gum, pectin gum, and xanthan gum. In a preferred embodiment, the food composition of the present invention does not include any anticaking agents such as sodium carbonate, tricalcium phosphate, potassium carbonate, ammonium carbonate, magnesium carbonate, hydrochloric acid, magnesium chloride, stannous chloride, sulphuric acid, sodium sulphates, potassium sulphate, calcium sulphate, ammonium sulphate, magnesium sulphate, copper sulphate, aluminium sulphate, aluminium sodium sulphate, aluminium potassium sulphate, aluminium ammonium sulphate, sodium hydroxide, potassium hydroxide, calcium hydroxide, ammonium hydroxide, magnesium hydroxide, calcium oxide, magnesium oxide, sodium ferrocyanide, potassium ferrocyanide, calcium ferrocyanide, dicalcium diphosphate, sodium aluminium phosphate, sodium silicate, silicon dioxide, calcium silicate, magnesium silicate, magnesium trisilicate, talc, sodium aluminium silicate, potassium aluminium silicate, aluminium calcium silicate, bentonite, kaolin, stearic acid, magnesium stearate, calcium stearate, gluconic acid, glucono delta-lactone, sodium gluconate, potassium gluconate, calcium gluconate, ferrous gluconate, ferrous lactate, polydimethylsiloxane, calcium silicate.

The composition is food-grade. Food-grade means that the composition is safe for being consumed by a human.

Preferably, the food composition is used for the preparation of a dehydrated beverage product, food seasoning, a food condiment, a soup concentrate or a sauce concentrate. Preferably, these food products are in a dehydrated form.

The composition may be in the form of a powder.

The food composition in powdered form may be used for preparing a food product. The food composition in powdered form may be used for preparing a bouillon tablet, bouillon cube or dehydrated beverage product. Dehydrated beverage product means a beverage concentrate, preferably a fruit juice concentrate or vegetable concentrate or combination thereof.

## Examples

### Example 1: Process

Powdered ingredients sensitive to moisture may easily cake/lump when exposed to humid conditions. Lump formations may lead to flow-ability issues and/or poor mixing homogeneity in further processing. Lump formations are also negatively perceived/appreciated by consumers. Surprisingly, the inventors managed to improve powder characteristics in term of flow-ability and cake/lump formation by incorporating fiber into sensitive amorphous ingredients.

The general procedure to prepare stable moisture sensitive ingredient is:

1. Mixing the amorphous ingredient in paste form with bran or fiber.
2. Drying the mixture from 1
3. Optionally milling the dried mixture into powder

*Sample preparation*

For a consistent comparability, as the amorphous ingredients used has been in a paste form (a certain water content directly derives from an aqueous amorphous ingredient), the ratio of the amorphous ingredients and fiber in the examples has been presented in dry weight basis (wt%-db). The dry weight was calculated following the equation below:

$$\text{Dry weight} = \text{Total weight} \times (1 - \text{Water content})$$

Calculation: Ex. 4 as an example, 79.5 g of fermented plant ingredient (water content of 30 wt%) was processed with 20.5 g of bran (water content of 5.5 wt%). The ratio of plant ingredient and the bran in dry weight basis therefore:

$$79.5 \times (1.00 - 0.30) : 20.5 \times (1.00 - 0.055) = 74.2 : 25.8$$

Commercial available wheat bran (median particle size (Dv50) of 40 $\mu$m), carrot fibers (median particle size (Dv50) of 23 $\mu$m), citrus fibers (median particle size (Dv50) of 138 $\mu$m) are used. Tomato paste (water content 38 wt%-wet basis) is used. A reaction flavor broth or reaction flavor concentrate according to US5476773 is used. Within the below examples a reaction flavor concentrate having a water content of 30 wt%-wet basis is used. A fermented plant ingredient broth or fermented plant ingredient concentrate according to WO2009040150 or WO2010105842 is used. Within the below examples a fermented plant ingredient concentrate is used having a water content of 30 wt%-wet basis. A hydrolysed plant protein broth or hydrolysed plant protein concentrate according to KR20120048111 or US20100221387 is used. Within the below examples a hydrolysed plant protein broth having a water content of 90 wt%-wet basis and a hydrolysed plant protein concentrate having a water content of 30 wt%-wet basis are used. A beef extract paste (50 wt%-wet basis) is used. The amorphous ingredient was placed in Thermomix TM5 (Vorwerk &Co. KG, Germany). Optionally, the Thermomix was set to 75 °C for a hot mixing process. Then fiber or bran was added while stirring at Thermomix with speed setting of two to three. To ensure homogenous mixing, mixing is extended for 3 further minutes after addition of the fiber or bran. The resulting wet cake (paste) was spread on a platter with paste thickness at approx. 1 cm and then dried. Drying was carried out in a VO-400 vacuum oven equipped with PM-400 vacuum pump (Memmert GmbH+Co.KG, Germany). Drying was performed at 70 °C for 6 h at reduced pressure of 20 mbar. The dry cake was then milled in a knife mill Grindomix GM200 (Retsch, Germany) for 15 s at speed of 4000 rpm in reversed rotation setting.
The resulting powders were equilibrated to aw = 0.48 or at a lower value in an ICH110 climate chamber (Memmert GmbH, Germany) for 3 days. Subsequently, flow-ability was measured in duplicate.

*Water activity measurement*

Water activity was measured with Hygrolab HC2-aw-USB (Rotronic AG, Switzerland) connected to PC with HW4-P-QUICK-Vx software (Rotronic AG, Switzerland). Measurement were carried out at 25.0 $\pm$0.5 °C according to AOAC 978.18-1978, Water activity of canned vegetables.

*Flow-ability*

The powders were equilibrated to aw = 0.48 in an ICH110 climate chamber (Memmert GmbH, Germany) for 3 days. Subsequently, flow-ability was measured in duplicate. Flow-ability was measured using a Schulze Ring Shear Tester RST-01.pc according to ASTM D6467. Flowability measurements were carried out with pre-shear normal stress set to 2600 Pa and shear normal stress to 390, 1235, and 2080 Pa.

*Caking test*

Fifteen gram of the amorphous powders was filled in moulds (dimension: 50 x 25 x 20 mm). Then, the moulds were hermetically sealed in aluminium-pouches. Then, the hermetically sealed pouches were subjected to top load of 70 g/cm$^2$ while being stored at 65 °C for 6 h. Then, the pouches were overnight cooled to room temperature and subjected to hardness measurement.
Hardness measurement was carried out using Texture Analyser TA-HDplus (Stable Micro System, UK) equipped with 250 kg load cell and P/0.5 cylindrical probe. Texture Analyser test mode was set to "Compression" with pre-test speed of 1 mm/s, test speed of 0.5 mm/s, post-test speed of 10 mm/s, target mode of "Distance", distance of 5 mm, halt time was set to "No", way back of 10 mm, trigger type to "Auto(Force), and trigger force of 50 gram. The maximum force was recorded as cake hardness. Measurements were carried out in 6 replications.

**Examples 2-4:**

Comp. Ex. 2 and Ex. 4 were prepared according to Ex. 1. Comp. Ex. 3 was prepared by dry-mixing (without water and drying).

|  | Comp. Ex 2 | Comp. Ex 3 | Ex. 4 |
|---|---|---|---|
| Fermented plant ingredient (wt%-db) | 100 | 74,2 | 74,2 |
| Wheat bran (wt%-db) | 0 | 25,8 | 25,8 |
| *Flowability test* |  |  |  |
| Water activity (-) | 0,48 | 0,48 | 0,48 |
| Flowability (ffc) | 1,35 | 1,8 | 6,8 |
| *Lump formation test* |  |  |  |
| Water activity (-) | 0,12 | 0,13 | 0,15 |
| Lump hardness (N/cm$^2$) | 484 | 148 | 4 |

The flow-ability can be significantly improved by the process of this invention (example 4) compared to a dry mixing (comparison example 3).

**Examples 5-14: Different ratios of fermented plant ingredient and wheat bran in different processes:**

Comparison examples 5-8 have been dry mixed (without water and drying) at different ratios of fermented plant ingredient and wheat bran. None of the examples obtain a powder having a flow-ability above 1.8.

|  | Comp. Ex. 5 | Comp. Ex 6 | Comp. Ex 7 | Comp. Ex 8 |
|---|---|---|---|---|
| Fermented plant ingredient (wt%-db) | 87,1 | 80,6 | 67,7 | 50 |
| Wheat bran (wt%-db) | 12,9 | 19,4 | 33,3 | 50 |
| *Flowability test* |  |  |  |  |
| Water activity (-) | 0,48 | 0,48 | 0,48 | 0,48 |
| Flowability (ffc) | 1,6 | 1,7 | 1,8 | 1,7 |
| *Lump formation test* |  |  |  |  |
| Water activity (-) | 0,08 | 0,11 | 0,13 | 0,15 |
| Lump hardness (N/cm$^2$) | 362 | 249 | 112 | 84 |

Examples 9-14 are prepared according to example 1:

|  | Comp. Ex 9 | Ex. 10 | Ex. 11 | Ex. 12 |
|---|---|---|---|---|
| Fermented plant ingredient (wt%-db) | 93,6 | 87,1 | 84,1 | 80,6 |
| Wheat bran (wt%-db) | 6,4 | 12,9 | 15,9 | 19,4 |
| *Flowability test* |  |  |  |  |
| Water activity (-) | 0,48 | 0,48 | 0,48 | 0,48 |
| Flowability (ffc) | 1,6 | 2,4 | 2,5 | 2,7 |
| *Lump formation test* |  |  |  |  |
| Water activity (-) | 0,11 | 0,10 | 0,13 | 0,13 |

(continued)

| | | | | |
|---|---|---|---|---|
| *Lump formation test* | | | | |
| Lump hardness (N/cm$^2$) | 109 | 24 | 18 | 12 |

| | Ex. 13 | Ex. 14 |
|---|---|---|
| Fermented plant ingredient (wt%-db) | 73,7 | 50 |
| Wheat bran (wt%-db) | 26,3 | 50 |
| *Flowability test* | | |
| Water activity (-) | 0,48 | 0,48 |
| Flowability (ffc) | 6,5 | 5,5 |
| *Lump formation test* | | |
| Water activity (-) | 0,15 | 0,15 |
| Lump hardness (N/cm$^2$) | No lumps formed | 4 |

Comparison example 9 shows that an amount of 6.4wt% of wheat bran is not enough to achieve a desired flow-ability of at least 1.9.

**Examples 15-21: Addition of salt:**

| | Comp. Ex 15 | Comp Ex. 16 | Comp Ex. 17 | Ex. 18 | Ex. 19 |
|---|---|---|---|---|---|
| Fermented plant ingredient (wt%-db) | 66,6 | 67,7 | 67,7 | 67,7 | 67,7 |
| Wheat bran (wt%-db) | 0 | 0 | 6,5 | 12,9 | 19,4 |
| Salt (wt%-db) | 33,4 | 32,3 | 25,8 | 19,4 | 12,9 |
| *Flowability test* | | | | | |
| Water activity (-) | 0,48 | 0,48 | 0,48 | 0,48 | 0,48 |
| Flowability (ffc) | 1,45 | 1,45 | 1,65 | 3,85 | 6,2 |
| *Lump formation test* | | | | | |
| Water activity (-) | 0,15 | 0,15 | 0,10 | 0,12 | 0,09 |
| Lump hardness (N/cm$^2$) | 484 | 484 | 387 | 35 | 13 |
| | Ex. 20 | Ex. 21 | | | |
| Fermented plant ingredient (wt%-db) | 71,2 | 83,7 | | | |
| Wheat bran (wt%-db) | 20,6 | 11,5 | | | |
| Salt (wt%-db) | 8,2 | 4,8 | | | |
| *Flowability test* | | | | | |
| Water activity (-) | 0,48 | 0,47 | | | |
| Flowability (ffc) | 6,2 | 2,25 | | | |
| *Lump formation test* | | | | | |
| Water activity (-) | 0,11 | | | | |
| Lump hardness (N/cm$^2$) | 5 | | | | |

Examples 18-21 shows that the addition of salt might further improve the flow-ability. Nevertheless comparison examples 15 to 17 also shows that with no addition of wheat bran or with a too low amount of wheat bran a desired flow-ability of at least 1.9 cannot be achieved even at a high amount of salt added.

**Examples 22-25: Carrot fiber:**

| | Comp. Ex 22 | Ex. 23 | Ex. 24 | Ex. 25 |
|---|---|---|---|---|
| Fermented plant ingredient (wt%-db) | 93,5 | 87,1 | 80,6 | 71,2 |
| Carrot fiber (wt%-db) | 6,5 | 12,9 | 19,4 | 20,6 |
| Salt (wt%-db) | 0 | 0 | 0 | 8,2 |
| *Flowability test* | | | | |
| Water activity (-) | 0,48 | 0,48 | 0,48 | 0,48 |
| Flowability (ffc) | 1,3 | 2,3 | 2,8 | 3,2 |
| *Lump formation test* | | | | |
| Water activity (-) | 0,12 | 0,12 | 0,14 | 0,10 |
| Lump hardness (N/cm$^2$) | 60 | 48 | 42 | 14 |

Comparison example 22 has been obtained by dry mixing (without water and drying) while examples 23 to 25 have been obtained according to example 1. By the addition of carrot fibers instead of wheat bran according to example 1 the flow-ability can be also improved significantly compared to a dry-mix.

**Examples 26-37: Other amorphous ingredients:**

| | Comp. Ex. 26 | Ex. 27 | Comp. Ex. 28 | Comp. Ex. 29 | Ex. 30 |
|---|---|---|---|---|---|
| Type of amorphous ingredient | Reaction flavour | Reaction flavour | Beef extract | Beef extract | Beef extract |
| Quantity of amorphous ingredient (wt%-db) | 73,7 | 73,7 | 100 | 73,7 | 73,7 |
| Wheat bran (wt%-db) | 26,3 | 26,3 | | 26,3 | 26,3 |
| *Flowability test* | | | | | |
| Water activity (-) | 0,48 | 0,48 | 0,38 | 0,42 | 0,42 |
| Flowability (ffc) | 1,7 | 5,7 | 0,95 | 1.32 | 4,1 |

| | Comp. Ex. 31 | Comp. Ex. 32 | Ex. 33 |
|---|---|---|---|
| Type of amorphous ingredient | Tomato paste | Tomato paste | Tomato paste |
| Quantity of amorphous ingredient (wt%-db) | 100 | 73,7 | 73,7 |
| Wheat bran (wt%-db) | 0 | 26,3 | 26,3 |
| *Flowability test* | | | |
| Water activity (-) | 0,42 | 0,40 | 0,40 |
| Flowability (ffc) | 1,16 | 1.45 | 7,80 |

(continued)

| | | Comp. Ex. 31 | Comp. Ex. 32 | Ex. 33 |
|---|---|---|---|---|
| | Comp. Ex. 34 | Comp. Ex. 35 | Ex. 36 | Ex. 37 |
| Type of amorphous ingredient | Hydrolysed plant protein | Hydrolysed plant protein | Hydrolysed plant protein | Hydrolysed plant protein |
| Quantity of amorphous ingredient (wt%-db) | 100 | 58 | 58 | 58 |
| Wheat bran (wt%-db) | 0 | 42 | 42 | 42 |
| *Flowability test* | | | | |
| Water activity (-) | 0,40 | 0,40 | 0,40 | 0,40 |
| Flowability (ffc) | 0.95 | 1.6 | 4,7 | 5,8 |

Comparison examples 28, 31 and 34 shows the flow-ability of the amorphous ingredient itself. Comparison examples 26, 29, 32 and 35 show that by a dry mixed the flow-ability can be improved compared to the corresponding amorphous ingredient itself, but that a desired flow-ability of at least 1.9 cannot be achieved. Within examples 27, 30, 33, 36 and 37 it is shown that an improved flow-ability can be achieved also with other amorphous ingredients through the addition of wheat bran according to example 1. Example 36 and 37 are different regarding the water content of the amorphous ingredient as within example 36 a concentrate having a water content of 30%wt is used and within example 37 a broth having a water content of 90%wt is used, which result in the corresponding water content of the mixture (amorphous ingredient and wheat bran) of 19%wt or 56%wt (by weight of the total mixture).

**Examples 38-41: Other fibers:**

| | Ex 38 | Ex. 39 | Ex. 40 |
|---|---|---|---|
| Fermented plant ingredient (wt%-db) | 73,7 | 73,7 | 73,7 |
| Origin of fiber/bran | Citrus fiber | Oat bran | Rye bran |
| Fiber (wt%-db) | 26,3 | 26,3 | 26,3 |
| *Flowability test* | | | |
| Water activity (-) | 0,44 | 0,48 | 0,48 |
| Flowability (ffc) | 3,0 | 4,6 | 2,95 |

| | Ex 41 |
|---|---|
| Tomato paste (wt%-db) | 73,7 |
| Tomato fiber (wt%-db) | 26,3 |
| *Flowability test* | |
| Water activity (-) | 0,40 |
| Flowability (ffc) | 9,50 |

Examples 38-41 are prepared according to example 1 and show that different fibers or bran can be used.

**Claims**

1. A process for the production of a food composition comprising between 10 to 90wt% (by dry weight of the food composition) of an amorphous ingredient and between 10 to 90wt% (by dry weight of the food composition) of a fiber, the process comprising the steps of:

   a) Mixing the fiber with the amorphous ingredient and optionally water, wherein the mixture has a water content between 20-80% (by weight of the total mixture);
   b) Drying the mixture of step a) to obtain a food composition powder;
   c) Optionally milling the dried food composition powder obtained in step b);

   wherein the fiber is a water insoluble dietary fiber, a cereal bran or a combination thereof and wherein the fibers are not considered to be an amorphous ingredient and are water insoluble dietary fibers.

2. A process for the production of a food composition as claimed in claim 1, wherein the fiber is selected from at least one of fibers from corn, potato, pea, carrot, beetroot, pumpkin, citrus, apple, wheat, oat, bamboo, tomato, bell pepper, leek, ginger, onion, kale, parsnip, celery, cucumber, courgette, broccoli, kohlrabi, red cabbage, spinach, endive, asparagus or combinations thereof.

3. A process for the production of a food composition as claimed in claim 1, wherein the cereal bran is selected from the group consisting of rice bran, wheat bran, soya bran, buckwheat bran, corn bran, oat bran, barley bran, rye bran or a combination thereof.

4. A process for the production of a food composition as claimed in any one of claims 1 or 3, wherein the amorphous ingredient has a transition temperature (Tg) in the range of -30 °C < Tg < 60 °C at a water activity of 0.10 < aw < 0.60.

5. A process for the production of a food composition as claimed in any one of claims 1 to 4, wherein the amorphous ingredient is selected from the group consisting of yeast extract, vegetable powder, vegetable puree, vegetable extract, animal extract, bacterial extract, fermented plant ingredient broth, fermented plant ingredient concentrate, meat powder, fruit puree, fruit powder, fruit extract, meat hydrolysate, reaction flavour broth, reaction flavour concentrate, hydrolysed plant protein broth, hydrolysed plant protein concentrate or a combination thereof.

6. A process for the production of a food composition as claimed in any one of claims 1 to 5 wherein the food composition comprising between 40 to 80wt% (by dry weight of the food composition) of an amorphous ingredient and between 10 to 50wt% (by dry weight of the food composition) of a fiber.

7. A process for the production of a food composition as claimed in any one of claims 1 to 6, wherein the food composition further comprises salt in an amount of up to 30wt% (by dry weight of the food composition), preferably between 3 to 25wt% (by dry weight of the food composition).

8. A process for the production of a food composition as claimed in any one of claims 1 to 7, wherein the mixture has a water content between 25-75% (by weight of the total mixture).

9. A process for the production of a food composition as claimed in any one of claims 1 to 8, wherein the drying is done by oven drying, air drying, freeze drying, drum drying, vacuum drying, bed drying, microwave-vacuum drying, infrared radiation drying or combination thereof.

10. A process for the production of a food composition as claimed in any one of claims 1 to 9, wherein the fiber does not include water soluble fibers.

11. A process for the production of a food composition as claimed in any one of claims 1 to 10 for preparing a dehydrated beverage product or bouillon tablet or bouillon cube.

**Patentansprüche**

1. Verfahren für die Produktion einer Lebensmittelzusammensetzung, umfassend zu zwischen 10 bis 90 Gew.-% (nach Trockengewicht der Lebensmittelzusammensetzung) einen amorphen Bestandteil und zu zwischen 10 bis 90 Gew.-

% (nach Trockengewicht der Lebensmittelzusammensetzung) eine Faser, das Verfahren umfassend die Schritte:

a) Mischen der Faser mit dem amorphen Bestandteil und optional Wasser, wobei die Mischung einen Wassergehalt zwischen 20-80 % (nach Gewicht der Gesamtmischung) aufweist;
b) Trocknen der Mischung von Schritt a), um ein Lebensmittelzusammensetzungspulver zu erhalten;
c) Optional Mahlen des getrockneten Lebensmittelzusammensetzungspulvers, das in Schritt b) erhalten wird;

wobei die Faser eine wasserunlösliche Nahrungsfaser, eine Getreidekleie oder eine Kombination davon ist und wobei die Fasern nicht als ein amorpher Bestandteil betrachtet werden und wasserunlösliche Nahrungsfasern sind.

2. Verfahren für die Produktion einer Lebensmittelzusammensetzung nach Anspruch 1, wobei die Faser aus mindestens einer von Fasern aus Mais, Kartoffel, Erbse, Karotte, Roter Rübe, Kürbis, Zitrusgewächs, Apfel, Weizen, Hafer, Bambus, Tomate, Paprika, Lauch, Ingwer, Zwiebel, Grünkohl, Pastinake, Sellerie, Gurke, Zucchini, Brokkoli, Kohlrabi, Rotkohl, Spinat, Endivie, Spargel oder Kombinationen davon ausgewählt ist.

3. Verfahren für die Produktion einer Lebensmittelzusammensetzung nach Anspruch 1, wobei die Getreidekleie aus der Gruppe ausgewählt ist, bestehend aus Reiskleie, Weizenkleie, Sojakleie, Buchweizenkleie, Maiskleie, Haferkleie, Gerstenkleie, Roggenkleie oder einer Kombination davon.

4. Verfahren für die Produktion einer Lebensmittelzusammensetzung nach einem der Ansprüche 1 oder 3, wobei der amorphe Bestandteil eine Übergangstemperatur (Tg) in dem Bereich von -30 °C < Tg < 60 °C bei einer Wasseraktivität von 0,10 < aw < 0,60 aufweist.

5. Verfahren für die Produktion einer Lebensmittelzusammensetzung nach einem der Ansprüche 1 bis 4, wobei der amorphe Bestandteil aus der Gruppe ausgewählt ist, bestehend aus Hefeextrakt, Gemüsepulver, Gemüsepüree, Gemüseextrakt, Tierextrakt, Bakterienextrakt, Brühe eines fermentierten Pflanzenbestandteils, Konzentrat des fermentierten Pflanzenbestandteils, Fleischpulver, Fruchtpüree, Fruchtpulver, Fruchtextrakt, Fleischhydrolysat, Reaktionsaromabrühe, Reaktionsaromakonzentrat, Brühe eines hydrolysierten Pflanzenproteins, Konzentrat des hydrolysierten Pflanzenproteins oder einer Kombination davon.

6. Verfahren für die Produktion einer Lebensmittelzusammensetzung nach einem der Ansprüche 1 bis 5, die Lebensmittelzusammensetzung umfassend zu zwischen 40 bis 80 Gew.-% (nach Trockengewicht der Lebensmittelzusammensetzung) einen amorphen Bestandteil und zu zwischen 10 bis 50 Gew.-% (nach Trockengewicht der Lebensmittelzusammensetzung) eine Faser.

7. Verfahren für die Produktion einer Lebensmittelzusammensetzung nach einem der Ansprüche 1 bis 6, wobei die Lebensmittelzusammensetzung ferner Salz in einer Menge von bis zu 30 Gew.-% (nach Trockengewicht der Lebensmittelzusammensetzung), vorzugsweise zwischen 3 bis 25 Gew.-% (nach Trockengewicht der Lebensmittelzusammensetzung) umfasst.

8. Verfahren für die Produktion einer Lebensmittelzusammensetzung nach einem der Ansprüche 1 bis 7, wobei die Mischung einen Wassergehalt zwischen 25-75 % (nach Gewicht der Gesamtmischung) aufweist.

9. Verfahren für die Produktion einer Lebensmittelzusammensetzung nach einem der Ansprüche 1 bis 8, wobei das Trocknen durch Ofentrocknen, Lufttrocknen, Trommeltrocknen, Vakuumtrocknen, Betttrocknen, Mikrowellenvakuumtrocknen, Infrarotstrahlungstrocknen oder Kombinationen davon erfolgt.

10. Verfahren für die Produktion einer Lebensmittelzusammensetzung nach einem der Ansprüche 1 bis 9, wobei die Faser keine wasserlöslichen Fasern einschließt.

11. Verfahren für die Produktion einer Lebensmittelzusammensetzung nach einem der Ansprüche 1 bis 10 zum Herstellen eines dehydratisierten Getränkeprodukts oder einer Bouillontablette oder eines Bouillonwürfels.

**Revendications**

1. Procédé destiné à la production d'une composition alimentaire comprenant entre 10 et 90 % en poids (en poids sec de la composition alimentaire) d'un ingrédient amorphe et entre 10 et 90 % en poids (en poids sec de la composition alimentaire) d'une fibre, le procédé comprenant les étapes consistant à :

a) mélanger la fibre avec l'ingrédient amorphe et facultativement de l'eau, le mélange ayant une teneur en eau entre 20 et 80 % (en poids du mélange total) ;

b) sécher le mélange de l'étape a) pour obtenir une poudre de composition alimentaire ;

c) facultativement moudre la poudre de composition alimentaire séchée obtenue à l'étape b) ;

la fibre étant une fibre alimentaire insoluble dans l'eau, un son de céréale ou une combinaison de ceux-ci et les fibres n'étant pas considérées comme étant un ingrédient amorphe et étant des fibres alimentaires insolubles dans l'eau.

2. Procédé destiné à la production d'une composition alimentaire selon la revendication 1, dans lequel la fibre est choisie parmi au moins l'une parmi des fibres provenant de maïs, pomme de terre, pois, carotte, betterave, potiron, agrume, pomme, blé, avoine, bambou, tomate, poivron, poireau, gingembre, oignon, chou frisé, panais, céleri, concombre, courgette, brocoli, chou-rave, chou rouge, épinard, endive, asperge ou de combinaisons de ceux-ci.

3. Procédé destiné à la production d'une composition alimentaire selon la revendication 1, dans lequel le son de céréale est choisi dans le groupe constitué par son de riz, son de blé, son de soja, son de sarrasin, son de maïs, son d'avoine, son d'orge, son de seigle ou une combinaison de ceux-ci.

4. Procédé destiné à la production d'une composition alimentaire selon l'une quelconque des revendications 1 ou 3, dans lequel l'ingrédient amorphe a une température de transition (Tg) dans la plage de -30 °C < Tg < 60 °C à une activité d'eau de 0,10 < aw < 0,60.

5. Procédé destiné à la production d'une composition alimentaire selon l'une quelconque des revendications 1 à 4, dans lequel l'ingrédient amorphe est choisi dans le groupe constitué par extrait de levure, poudre de légumes, purée de légumes, extrait de légumes, extrait animal, extrait bactérien, bouillon d'ingrédients végétaux fermentés, concentré d'ingrédients végétaux fermentés, poudre de viande, purée de fruits, poudre de fruits, extrait de fruits, hydrolysat de viande, bouillon d'arômes de réaction, concentré d'arômes de réaction, bouillon de protéines végétales hydrolysées, concentré de protéines végétales hydrolysées ou une combinaison de ceux-ci.

6. Procédé destiné à la production d'une composition alimentaire selon l'une quelconque des revendications 1 à 5 dans lequel la composition alimentaire comprend entre 40 et 80 % en poids (en poids sec de la composition alimentaire) d'un ingrédient amorphe et entre 10 et 50 % en poids (en poids sec de la composition alimentaire) d'une fibre.

7. Procédé destiné à la production d'une composition alimentaire selon l'une quelconque des revendications 1 à 6, dans lequel la composition alimentaire comprend en outre du sel en une quantité allant jusqu'à 30 % en poids (en poids sec de la composition alimentaire), de préférence entre 3 et 25 % en poids (en poids sec de la composition alimentaire).

8. Procédé destiné à la production d'une composition alimentaire selon l'une quelconque des revendications 1 à 7, dans lequel le mélange a une teneur en eau entre 25 et 75 % (en poids du mélange total).

9. Procédé destiné à la production d'une composition alimentaire selon l'une quelconque des revendications 1 à 8, dans lequel le séchage est fait par séchage au four, séchage à l'air, lyophilisation, séchage au tambour, séchage sous vide, séchage en lit, séchage sous vide par micro-ondes, séchage par rayonnement infrarouge ou combinaison de ceux-ci.

10. Procédé destiné à la production d'une composition alimentaire selon l'une quelconque des revendications 1 à 9, dans lequel la fibre ne comporte pas de fibres hydrosolubles.

11. Procédé destiné à la production d'une composition alimentaire selon l'une quelconque des revendications 1 à 10 permettant de préparer un produit de boisson déshydraté ou une tablette de bouillon ou un cube de bouillon.

EP 3 790 405 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000233922 B
- US 2238149 A
- WO 2012159873 A
- WO 2017171553 A
- WO 2009040150 A
- WO 2010105842 A

- WO 2013092296 A
- US 5476773 A
- KR 20120048111
- US 20100221387 A
- CN 105995587

**Non-patent literature cited in the description**

- Flow properties of powders and bulk solids. **SCHULZE, D.** Braunschweig/Wolfenbuttel. University of Applied Sciences, 2006